# EUROPÄISCHE PATENTANMELDUNG

(11) **EP 2 657 001 A1**
(43) Veröffentlichungstag der Anmeldung: **30.10.2013**
(21) Anmeldenummer: 13164436.1
(22) Anmeldetag: 19.04.2013
(51) Int. Cl.: B29C 49/42, B65G 47/86

(54) **Handhabungsvorrichtung für Vorformlinge**

(30) Priorität: 24.04.2012 DE 202012004015 U
(71) Anmelder: Arcor GmbH, 64720 Michelstadt (DE)
(72) Erfinder: Rosin, Eduard, 64720 Michelstadt (DE)
(74) Vertreter: Eichstädt, Alfred

(57) **Zusammenfassung**

Die Erfindung betrifft eine Handhabungsvorrichtung zur Halterung von thermoplastischen Vorformlingen, die jeweils einen oben offenen Mündungsbereich mit fertig geformtem Außengewinde sowie einen geschlossenen Bodenbereich aufweisen, wobei unterhalb des Außengewindes eines Vorformlings jeweils ein Tragring vorgesehen ist und wobei zur Halterung der thermoplastischen Vorformlinge jeweils ein ein Haltemittel aufweisender Transporteur vorgesehen ist. Bei dem Haltemittel handelt es sich um ein Federelement, welches einen unteren Bereich, einen mittleren Bereich und einen oberen Bereich aufweist, wobei der untere Bereich konisch verläuft, der mittlere Bereich hohlzylindrisch ausgebildet ist und der obere Bereich nach außen umgebogen ist.

## Beschreibung

Die Erfindung betrifft eine Handhabungsvorrichtung zur Halterung von Vorformlingen beim Durchfahren einer Heizstrecke einer Streckblasmaschine.

Im Rahmen der Herstellung von beispielsweise PET-Flaschen werden üblicherweise Vorformlinge in der Heizstrecke einer Streckblasmaschine erwärmt und dann in einer Blasstation der Streckblasmaschine unter Zuhilfenahme eines Gases, vorzugsweise Druckluft, in die gewünschte Form gebracht.

Es ist bekannt, während der Erwärmung der Vorformlinge in der Heizstrecke die Vorformlinge mittels einer Spindel oder eines Dornes reibschlüssig zu halten. Die Spindeln bzw. Dorne sind wie Kettenglieder fest miteinander verbunden. Zusammen bilden sie eine umlaufende Kette. Die Vorformlinge werden hängend durch die Heizstrecke transportiert. Dabei besteht die Gefahr, dass sich Vorformlinge von der jeweiligen Spindel bzw. dem jeweiligen Dorn lösen und herabfallen. Um dies zu verhindern, sind zusätzliche axiale Sicherungen notwendig.

Aus der DE 203 11 657 U1 ist eine Vorrichtung zum Erwärmen von Vorformlingen aus thermoplastischem Kunststoff bekannt, bei welcher die Vorformlinge während ihres Erwärmens jeweils in einem Ansatz eines Kettengliedes einer Förderkette gehalten sind. In diesem Ansatz ist eine Hülse gelagert, die drehfest mit einem Zahnrad verbunden ist. In der Hülse ist ein Haltedorn drehfest, jedoch höhenverschieblich aufgenommen. Der Haltedorn ragt an seiner Unterseite über die Hülse hinaus und ist an seiner Oberseite mit einer Steuerstange verbunden. Mit Hilfe der Steuerstange und von stationären Kurvenrampen kann der Haltedorn in Axialrichtung verfahren werden. Dadurch kann der Haltedorn, der mit einem Federring ausgestattet ist, in den Mündungsbereich des Vorformlings eingeschoben und aus diesem wieder entfernt werden.

Aus der US 4,572,355 A1 ist eine Transportvorrichtung für Vorformlinge beim Durchfahren einer Heizstrecke beispielsweise einer Streckblasmaschine bekannt. Die Transportvorrichtung weist ein Haltemittel auf, das in den Mündungsbereich des jeweiligen Vorformlings eingreift und so ausgebildet ist, dass Mündungsbereiche unterschiedlicher Innendurchmesser ergriffen werden können. Dazu sind zwei übereinander angeordnete Kontaktelemente unterschiedlichen Außendurchmessers vorgesehen, die jeweils mit einem Gummiring ausgestattet sind.

Aus der DE 10 2005 011 805 A1 sind ein Verfahren und eine Vorrichtung zur Blasformung von Behältern bekannt. Dabei wird zur Halterung eines Vorformlings während dessen Erhitzen jeweils ein Tragelement verwendet, das in den Mündungsabschnitt des Vorformlings zumindest nahezu reibungsfrei eingeführt wird und nach seiner Einführung innerhalb des Mündungsabschnittes verspannt wird.

Aus der US 5,542,526 A sind eine Aufspannvorrichtung und ein Verfahren zur Verarbeitung eines offenen Artikels, beispielsweise einer Flasche oder eines anderen hohlen Artikels, bekannt. Diese Aufspannvorrichtung ist fingerförmig ausgebildet. Sie wird mit parallel zueinander angeordneten Fingern in den oben offenen Mündungsbereich der Flasche eingeführt. Anschließend werden die Finger auseinandergespreizt, um die jeweilige Flasche zu halten.

Die Aufgabe der Erfindung besteht darin, eine Handhabungsvorrichtung für Vorformlinge anzugeben, bei welcher die Vorformlinge während ihres Transportes durch die Heizstrecke einer Streckblasmaschine auch beim Vorliegen von Fertigungstoleranzen des Mündungsbereiches der Vorformlinge sicher gehalten werden.

Diese Aufgabe wird durch eine Handhabungsvorrichtung mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung ergeben sich aus deren nachfolgender Erläuterung anhand der Figuren. Es zeigt
- Figur 1: eine Skizze zur Veranschaulichung einer Handhabungsvorrichtung für Vorformlinge,
- Figur 2: eine vergrößerte Darstellung zweier Transporteure der Handhabungsvorrichtung,
- Figur 3: eine Darstellung eines Haltemittels der Handhabungsvorrichtung,
- Figur 4: eine Darstellung zur Veranschaulichung des Eintauchens der Haltemittel in den Mündungsbereich der Vorformlinge und
- Figur 5: eine Darstellung zur Veranschaulichung des Entfernens der Haltemittel aus dem Mündungsbereich der Vorformlinge.

Eine Handhabungsvorrichtung gemäß der Erfindung ist zur Halterung von thermoplastischen Vorformlingen vorgesehen, die jeweils einen oben offenen Mündungsbereich mit fertig geformten Außengewinde und einen geschlossenen Bodenbereich aufweisen, wobei unterhalb des Außengewindes jeweils ein Tragring vorgesehen ist, und wobei zur Halterung der thermoplastischen Vorformlinge jeweils ein ein Haltemittel aufweisender Transporteur vorgesehen ist. Bei diesem Haltemittel handelt es sich um ein Federelement, welches einen unteren Bereich, einen mittleren Bereich und einen oberen Bereich aufweist, wobei der untere Bereich konisch verläuft, der mittlere Bereich hohlzylindrisch ausgebildet ist und der obere Bereich nach außen umgebogen ist.

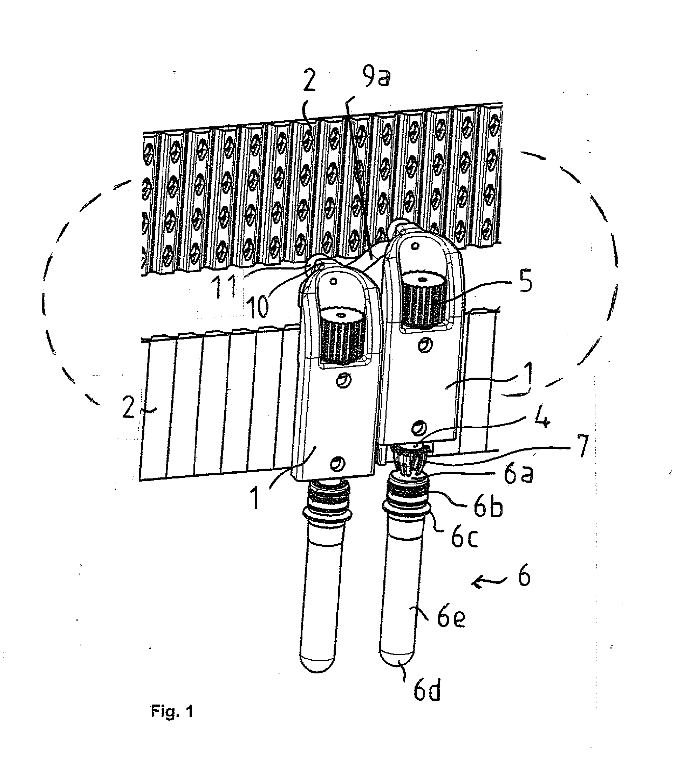

Die Figur 1 zeigt eine Skizze zur Veranschaulichung einer Handhabungsvorrichtung für Vorformlinge. Diese Handhabungsvorrichtung weist Transporteure 1 auf, die jeweils mit einem Haltemittel 7 versehen sind. Bei diesem Haltemittel 7 handelt es sich um ein Federelement, welches an einer in Axialrichtung durch den Transporteur 1 geführten Welle 4 befestigt ist. Die Welle 4 ist in ihrem vom Federelement abgewandten Endbereich mit einer Verzahnung 5 ausgestattet.

Das Federelement ist zur Halterung eines thermoplastischen Vorformlings 6 vorgesehen, welcher einen oben offenen Mündungsbereich 6a mit fertig geformtem Außengewinde 6b, einen unterhalb des Außengewindes vorgesehenen Tragring 6c, einen hohlzylindrischen Mittelteil 6e und einen geschlossenen Bodenbereich 6d aufweist.

Wie noch unten erläutert wird, wird das Federelement von oben in den oben offenen Mündungsbereich 6a des Vorformlings eingeführt und hält den Vorformling kraftschlüssig fest.

Während des Durchlaufens der Heizstrecke einer Streckblasmaschine steht die Verzahnung 5 der Welle 4 durch eine Aussparung des Transporteurs 1 in Verbindung mit einem nicht gezeichneten, vor dem Transporteur 1, parallel zur Heizstrecke verlaufenden Zahnriemen, so dass sich die Welle 4 mit dem an deren Unterseite befestigen Federelement 7 und dem vom Federelement 7 gehaltenen Vorformling um die in Axialrichtung verlaufende Mittelachse der Welle 4 dreht.

Der Transporteur 1 weist auf seiner Rückseite Führungsmittel auf, die in einer Führung eines auf einem Endloszahnriemen 2 befestigten Schlittens axial verschiebbar positioniert sind, um das als Haltemittel dienende Federelement am Anfang der Heizstrecke in den Mündungsbereich des Vorformlings eintauchen zu lassen sowie am Ende der Heizstrecke wieder aus dem Mündungsbereich des Vorformlings zu entfernen. Zu diesem Zweck weist der Transporteur 1 auf seiner Rückseite eine über ein Verbindungsstück 10 mit ihm verbundene Führungsrolle 11 auf, mittels welcher er auf einer Führungsbahn 9 läuft, die an einer vorgegebenen Stelle eine Erhöhung 9a aufweist. Läuft die genannte Führungsrolle 11 über diese Erhöhung, dann wird das Federelement 7 aus dem oben offenen Mündungsbereich des Vorformlings entfernt. Läuft die Führungsrolle 11 von einer derartigen Erhöhung 9a in den nicht erhöhten Bereich der Führungsbahn 9, dann wird das Federelement 7 abgesenkt und kann auf diese Weise in den oben offenen Mündungsbereich eines Vorformlings eintauchen.

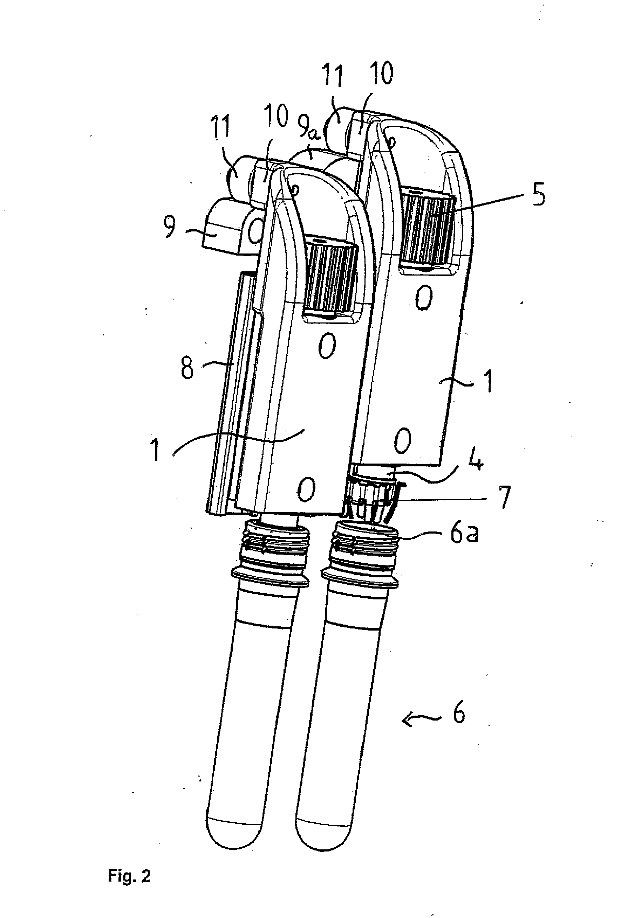

Die Figur 2 zeigt eine vergrößerte Darstellung zweier Transporteure 1 der Handhabungsvorrichtung. Der in der Figur 2 rechts gezeichnete Transporteur 1 befindet sich in einer axial erhöhten Position, da seine Führungsrolle 11 momentan über die Erhöhung 9a der Führungsbahn 9 läuft. In dieser axial erhöhten Position ist das an der Unterseite der Welle 4 befestigte Federelement 7 außerhalb des Mündungsbereiches 6a des Vorformlings 6 positioniert. Der in der Figur 2 links gezeichnete Transporteur 1 befindet sich nicht in einer axial erhöhten Position, da seine Führungsrolle 11 momentan über den nicht erhöhten Bereich der Führungsbahn 9 läuft. In dieser axial nicht erhöhten Position ist das Haltemittel 7 in den Mündungsbereich des Vorformlings 6 eingetaucht und hält diesen Vorformling kraftschlüssig fest.

In der Figur 2 ist des Weiteren der auf der Rückseite des Transporteurs 1 vorgesehene Schlitten 8 dargestellt, welcher auf dem Endloszahnriemen 2 befestigt ist und eine in Axialrichtung verlaufende Führung aufweist, innerhalb derer die auf der Rückseite des Transporteurs 1 vorgesehenen Führungsmittel positioniert sind. Durch ein Verschieben dieser Führungsmittel des Transporteurs 1 in der Führung des Schlittens 8 kann der jeweilige Transporteur inklusive seines Federelementes 7 in Axialrichtung relativ zum Vorformling, dessen axiale Höhenposition unverändert bleibt, angehoben und abgesenkt werden, wobei dieses Anheben und Absenken durch das Laufen der jeweiligen Führungsrolle 11 auf der Führungsbahn 9 bzw. deren Erhöhung 9a herbeigeführt wird.

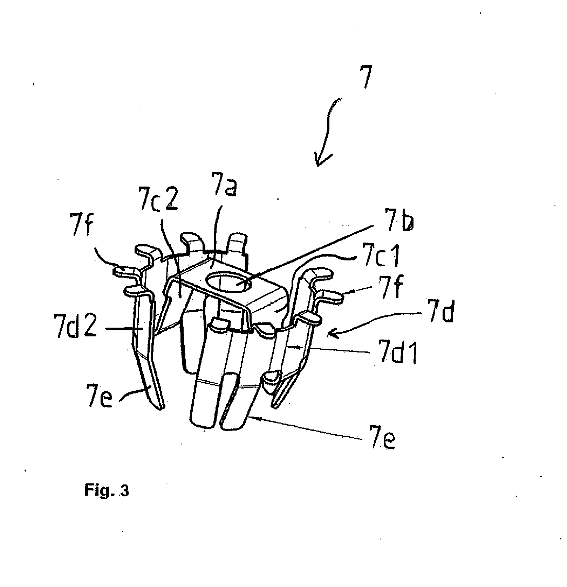

Die Figur 3 zeigt eine Darstellung eines Haltemittels 7 der Handhabungsvorrichtung. Dieses Haltemittel 7 ist als Federelement ausgebildet, welches einen unteren Bereich 7e, einen mittleren Bereich 7d und einen oberen Bereich 7f aufweist.

Der mittlere Bereich 7d ist hohlzylindrisch ausgebildet. Er weist zwei in Umfangsrichtung voneinander beabstandete Teilschalen 7d1 und 7d2 auf. Der Durchmesser dieses mittleren Bereiches 7d des Federelementes im unbelasteten Zustand des Federelementes ist größer als der Innendurchmesser des Mündungsbereiches 6a der Vorformlinge. Vorzugsweise ist der Durchmesser des mittleren Bereiches 7d des Federelementes im unbelasteten Zustand zwischen 1% und 10% größer als der Innendurchmesser des Mündungsbereiches 6a der Vorformlinge.

Dies hat den Vorteil, dass bei einem Einführen des Federelementes 7 von oben in den Mündungsbereich 6a eines Vorformlings 6 zunächst die mit zunehmender Entfernung vom mittleren Bereich 7d konisch nach innen verlaufenden, voneinander beabstandeten Finger des unteren Bereiches 7e des Federelementes in den Mündungsbereich eintauchen, so dass bei diesem Eintauchen eine Zentrierung des Federelementes 7 im Mündungsbereich des Vorformlings erzielt wird.

Taucht dann der mittlere Bereich 7d des Federelementes in den Mündungsbereich 6a des Vorformlings 6 ein, dann werden die den mittleren Bereich bildenden Teilschalen 7d1 und 7d2 geringfügig zusammengedrückt und dadurch bei diesem Einführen an die Abmessungen des Mündungsbereiches des Vorformlings angepasst und kraftschlüssig mit dem Vorformling verbunden. Dieses geringfügige Zusammendrücken des mittleren Bereiches 7d wird dadurch begünstigt, dass der genannte mittlere Bereich 7d des Federelementes voneinander in Umfangsrichtung beabstandete Teilschalen 7d1 und 7d2 aufweist.

Diese Teilschalen sind jeweils über einen seitlichen Verbindungssteg 7c1 bzw. 7c2 mit einer Deckplatte 7a des Federelementes verbunden. Der seitliche Verbindungssteg 7c1 führt von einem Endbereich der Deckplatte 7a schräg nach unten und ist an der Teilschale 7d1 in deren unterem Bereich befestigt. Der seitliche Verbindungssteg 7c2 führt vom anderen Endbereich der Deckplatte 7a ebenfalls schräg nach unten und ist an der Teilschale 7d2 in deren unterem Bereich befestigt.

Die Deckplatte 7a weist eine Bohrung 7b auf. Durch diese Bohrung 7b kann eine Schraube geführt werden, mittels welcher das Federelement am unteren Bereich der Welle 4 befestigt werden kann.

Des Weiteren weist das Federelement 7 in seinem oberen Bereich 7f nach außen umgebogene und voneinander beabstandete Finger auf, die jeweils mit dem mittleren Bereich 7d des Federelementes 7 verbunden sind. Die Unterseite dieser nach außen umgebogenen Finger dient jeweils als elastische Anschlagfläche für die Oberkante des Mündungsbereiches des jeweiligen Vorformlings, wenn das Federelement von oben in diesen Mündungsbereich eingesetzt wird.

Ein wesentlicher Vorteil des vorstehend beschriebenen Federelementes besteht darin, dass es Fertigungstoleranzen des Mündungsbereiches der Vorformlinge ausgleichen kann, da der mittlere Bereich 7d des Federelementes bei seinem Eintauchen in den Mündungsbereich des jeweiligen Vorformlings durch das bei diesem Eintauchen erfolgende Zusammendrücken automatisch an die exakten Abmessungen des Mündungsbereiches angepasst wird. Ein mit einem derartigen Federelement ausgestatteter Transporteur ist demzufolge dazu geeignet, Vorformlinge, deren Mündungsdurchmesser aufgrund von Fertigungstoleranzen geringfügig voneinander abweichen, während ihres Transportes durch die Heizstrecke einer Streckblasmaschine sicher zu halten. Es bedarf keiner zusätzlichen axialen Sicherung.

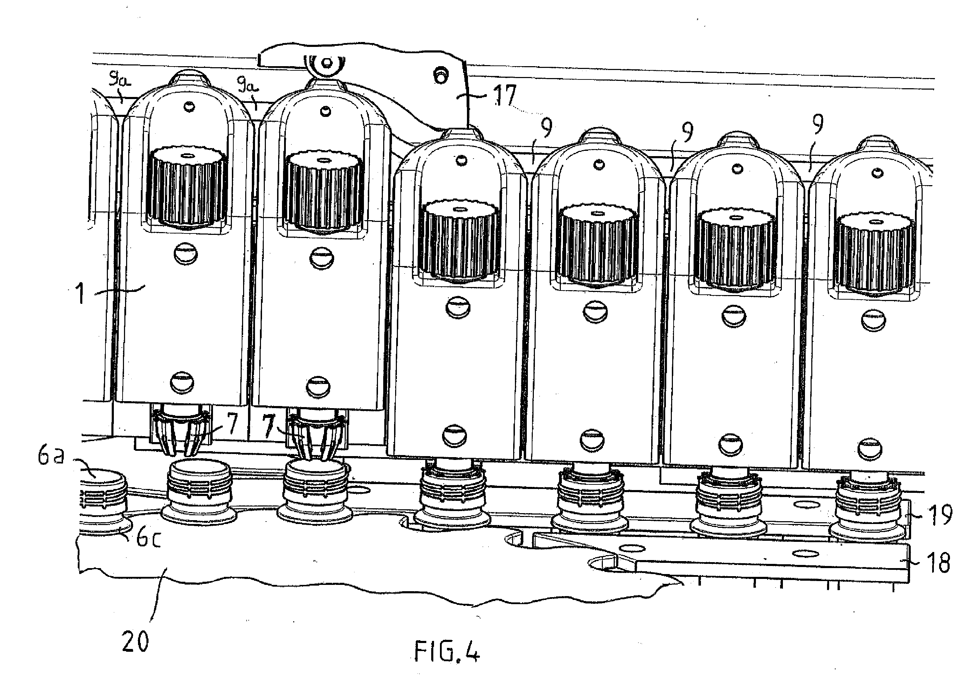

Die Figur 4 zeigt eine Darstellung zur Veranschaulichung des Eintauchens der als Haltemittel 7 verwendeten Federelemente von Transporteuren 1 in den oben offenen Mündungsbereich 6a eines jeweiligen Vorformlings 6 am Beginn einer Heizstrecke einer Streckblasmaschine.

Die Vorformlinge 6 werden unter Verwendung eines Eingabesterns 20 der Heizstrecke der Streckblasmaschine zugeführt, wobei die Vorformlinge jeweils mittels ihres Tragringes 6c in einer nach außen offenen Aufnahme des Eingabesternes 20 gehalten sind.

Gleichzeitig werden der Heizstrecke die am Endloszahnriemen 2 befestigten Transporteure 1, an deren Unterseite jeweils ein Federelement 7 herausragt, zugeführt. Diese Transporteure 1 bzw. deren Führungsrollen 11 laufen bei dieser Zuführung in einem erhöhten Bereich 9a der Führungsbahn, so dass sich die Transporteure 1 und damit auch deren Federelemente 7 in einer erhöhten Position oberhalb der Mündungsbereiche 6a der Vorformlinge 6 befinden.

Um ein Eintauchen der Federelemente 7 in den oben offenen Mündungsbereich 6a der Vorformlinge herbeizuführen, ist ein Niederhalter 17 vorgesehen, der den momentan am Niederhalter 17 vorbeilaufenden Transporteur 1 in den nicht erhöhten Bereich der Führungsbahn 9 drückt. Dadurch wird auch das in diesem Transporteur 1 angeordnete Federelement 7 axial nach unten bewegt und kann durch diese axiale Bewegung in den Mündungsbereich eines Vorformlings eintauchen und dadurch mit diesem Vorformling eine kraftschlüssige Verbindung bilden.

Nach dem Bilden dieser kraftschlüssigen Verbindung wird der Vorformling aus dem Eingabestern 20 entfernt, indem er in den Bereich zwischen zwei parallel zueinander verlaufenden Eingabeführungsschienen 18 und 19 übergeben wird. Von dort aus werden die an den Federelementen 7 der Transporteure 1 gehaltenen Vorformlinge im Bereich der Heizstrecke der Streckblasmaschine erwärmt, wobei sie im Bereich dieser Heizstrecke ständig um ihre Längsachse gedreht werden. Dadurch wird eine gleichmäßige Erwärmung der Vorformlinge über deren gesamten Umfangsbereich sichergestellt.

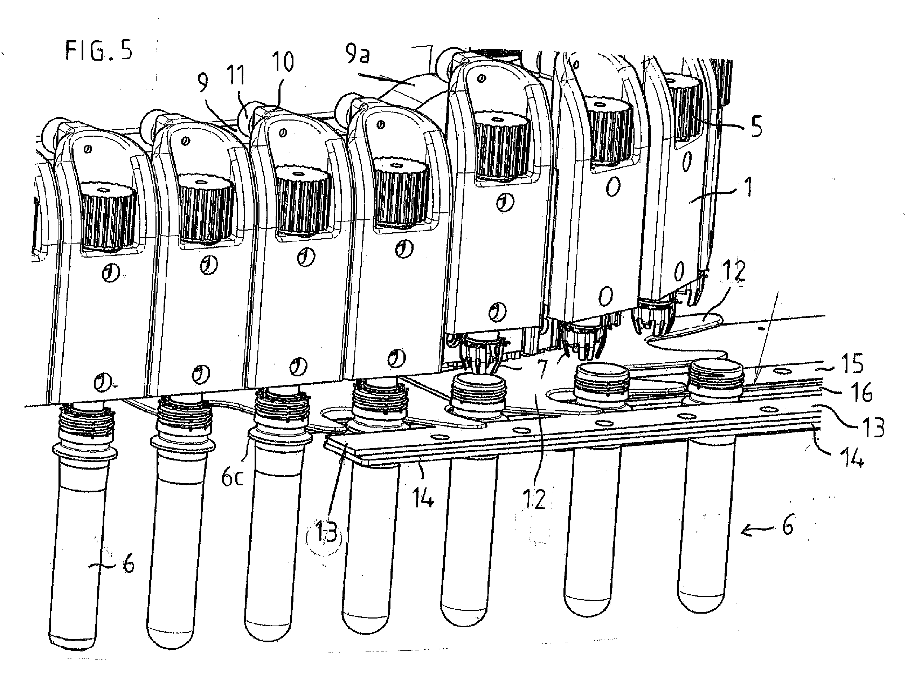

Die Figur 5 zeigt eine Darstellung zur Veranschaulichung des Entfernens der Haltemittel 7 aus dem Mündungsbereich 6a der Vorformlinge 6 am Ende der Heizstrecke der Streckblasmaschine.

In diesem Bereich sind ein Aufnahmen aufweisender Ausgabestern 12, ein rechtsseitiges Niederhalteblech 13, ein unter diesem angeordnetes rechtsseitiges Führungsblech 14, ein linksseitiges Niederhalteblech 15, ein linksseitiges Führungsblech 16 und eine Erhöhung 9a der Führungsbahn 9 vorgesehen.

Die von der Heizstrecke angelieferten Vorformlinge enthalten jeweils noch das in deren Mündungsbereich eingesetzte Federelement eines Transporteurs 1. Die angelieferten Vorformlinge werden in die nach außen offenen Aufnahmen des Ausgabesternes 12 übergeben. Gelangt anschließend der jeweilige Transporteur 1 in den erhöhten Bereich 9a der Führungsbahn 9, dann wird der Transporteur 1 mit dem zugehörigen Federelement 7 aus dem Mündungsbereich des Vorformlings in Axialrichtung nach oben herausgezogen, wobei der jeweilige Vorformling durch das rechtsseitige Niederhalteblech 13 und das linksseitige Niederhalteblech 15, welche oben auf dem Tragring 6c des jeweiligen Vorformlings aufliegen, in ihren axialen Höhenpositionen gehalten. Ist das jeweilige Federelement 7 aus dem Mündungsbereich 6a des jeweiligen Vorformlings herausgezogen, dann werden die Vorformlinge zwischen den beiden parallel zueinander verlaufenden Führungsblechen 14 und 16 zu der nachfolgenden Blasstation der Streckblasmaschine weiter transportiert.

**Bezugszeichenliste**

| | |
|---|---|
| 1 | Transporteur |
| 2 | Endloszahnriemen |
| 4 | Welle |
| 5 | Verzahnung |
| 6 | Vorformling |
| 6a | oben offener Mündungsbereich des Vorformlings |
| 6b | Außengewinde |
| 6c | Tragring |
| 6d | geschlossener Bodenbereich des Vorformlings |
| 6e | hohlzylindrischer Mittelteil des Vorformlings |
| 7 | Haltemittel |
| 7a | Deckplatte des Haltemittels 7 |
| 7b | Bohrung in der Deckplatte 7a |
| 7c1, 7c2 | seitliche Verbindungsstege der Deckplatte 7a |
| 7d | zylindrischer mittlerer Bereich des Haltemittels 7 |
| 7d1, 7d2 | Teilschalen des zylindrischen mittleren Bereichs |
| 7e | konisch verlaufender unterer Bereich des Haltemittels 7 |
| 7f | nach außen umgebogener oberer Bereich des Haltemittels 7 |
| 8 | Schlitten |
| 9 | Führungsbahn |
| 9a | Erhöhung der Führungsbahn |
| 10 | Zwischenstück |
| 11 | Führungsrolle des Transporteurs 1 |
| 12 | Ausgabestern |
| 13 | Niederhalteblech rechts |
| 14 | Führungsblech rechts |
| 15 | Niederhalteblech links |
| 16 | Führungsblech links |
| 17 | Niederhalter |
| 18 | Eingabeführungsschiene rechts |
| 19 | Eingabeführungsschiene links |
| 20 | Eingabestern |

## Patentansprüche

1. Handhabungsvorrichtung zur Halterung von thermoplastischen Vorformlingen, die jeweils einen oben offenen Mündungsbereich mit fertig geformtem Außengewinde sowie einen geschlossenen Bodenbereich aufweisen, wobei unterhalb des Außengewindes jeweils ein Tragring vorgesehen ist und wobei zur Halterung der thermoplastischen Vorformlinge jeweils ein ein Haltemittel aufweisender Transporteur vorgesehen ist, **dadurch gekennzeichnet, dass** das Haltemittel (7) ein Federelement ist, welches einen unteren Bereich (7e), einen mittleren Bereich (7d) und einen oberen Bereich (7f) aufweist, wobei der untere Bereich (7e) konisch verläuft, der mittlere Bereich (7d) hohlzylindrisch ausgebildet ist und der obere Bereich (7f) nach außen umgebogen ist.

2. Handhabungsvorrichtung nach Anspruch 1, **dadurch gekennzeichnet, dass** der untere Bereich (7e) mit dem mittleren Bereich (7d) verbundene Finger aufweist, die jeweils voneinander beabstandet sind und mit zunehmender Entfernung vom mittleren Bereich konisch nach innen verlaufen.

3. Handhabungsvorrichtung nach Anspruch 1 oder 2, **dadurch gekennzeichnet, dass** der mittlere Bereich (7d) in Umfangsrichtung voneinander beabstandete Teilschalen (7d1,7d2) aufweist.

4. Handhabungsvorrichtung nach einem der vorhergehenden Ansprüche, **dadurch gekennzeichnet, dass** der Durchmesser des mittleren Bereiches (7d) des Federelementes im unbelasteten Zustand größer ist als der Innendurchmesser des Mündungsbereiches (6a) der Vorformlinge.

5. Handhabungsvorrichtung nach Anspruch 4, **dadurch gekennzeichnet, dass** der Durchmesser des mittleren Bereiches (7d) des Federelementes im unbelasteten Zustand zwischen 1% und 10% größer ist als der Innendurchmesser des Mündungsbereiches (6a) der Vorformlinge.

6. Handhabungsvorrichtung nach einem der vorhergehenden Ansprüche, **dadurch gekennzeichnet, dass** der obere Bereich (7f) mit dem mittleren Bereich (7d) verbundene, nach außen umgebogene und voneinander beabstandete Finger aufweist.

7. Handhabungsvorrichtung nach einem der vorhergehenden Ansprüche, **dadurch gekennzeichnet, dass** das Federelement des Weiteren eine Deckplatte (7a) aufweist, die mit einer Bohrung (7b) versehen ist.

8. Handhabungsvorrichtung nach Anspruch 7, **dadurch gekennzeichnet, dass** die Deckplatte (7a) in einem ihrer Endbereiche über einen seitlichen Verbindungssteg (7c1) mit einer Teilschale (7d1) des mittleren Bereiches (7d) verbunden ist und in einem anderen Endbereich über einen weiteren seitlichen Verbindungssteg (7c2) mit einer weiteren Teilschale (7d2) des mittleren Bereiches (7d) verbunden ist.

9. Handhabungsvorrichtung nach Anspruch 8, **dadurch gekennzeichnet, dass** die seitlichen Verbindungsstege (7c1,7c2) die Deckplatte (7a) mit dem unteren Bereich der jeweiligen Teilschale (7d1,7d2) verbinden.

10. Handhabungsvorrichtung nach einem der Ansprüche 7 - 9, **dadurch gekennzeichnet, dass** die Deckplatte (7a) mittels eines durch die Bohrung (7b) geführten Befestigungselementes mit einer Welle (4) des Transporteurs (1) fest verbunden ist.

11. Handhabungsvorrichtung nach Anspruch 10, **dadurch gekennzeichnet, dass** die Welle (4) in ihrem von der Deckplatte (7a) abgewandten Endbereich mit einer Verzahnung (5) versehen ist.

12. Handhabungsvorrichtung nach einem der vorhergehenden Ansprüche, **dadurch gekennzeichnet, dass** der Transporteur (1) auf seiner Rückseite Führungsmittel aufweist, die in einer Führung eines auf einem Endloszahnriemen (2) befestigten Schlittens (8) axial verschiebbar positioniert sind und dass der Transporteur (1) durch ein Herausschieben aus der Führung vom Endloszahnriemen lösbar ist.
